# EUROPEAN PATENT APPLICATION

(11) **EP 1 502 793 A1**
(43) Date of publication of application: **02.02.2005**
(21) Application number: 03102369.0
(22) Date of filing: 30.07.2003
(51) Int. Cl.: B60K 15/035, B65D 90/34, F02M 25/08

(54) **Vent cover for an enclosure to be vented**

(71) Applicant: Delphi Technologies, Inc., Troy, MI 48007 (US)
(72) Inventor: Abidi, Mostafa, 2263 Luxembourg (LU); Leonard, Thomas, 4950 Bascharage (LU); Hammer, Laurent, 8282 Kehlen (LU)
(74) Representative: Beissel, Jean

(57) **Abstract**

A vent cover (32) for an enclosure (12) to be vented, the enclosure (12) comprising a vent port (26) and a sleeve (30); the sleeve surrounding the vent port and extending outwards from the enclosure. The vent cover (32) comprises a cup-shaped closure element (34) comprising a base (36) and a perimetric lateral wall (38), a plurality of openings (50) being arranged in the perimetric lateral wall (38) for allowing gasses to pass therethrough. The vent cover (32) further comprises retaining means (64) for connecting the vent cover (32) to the enclosure (12), such that, when the vent cover (32) is connected to the enclosure (12), the perimetric lateral wall (38) of the closure element (34) surrounds the sleeve (30) of the enclosure (12) and the closure element (34) continuously closes the vent port (26).

## Description

### Field of the invention

The present invention generally relates to a vent cover for an enclosure to be vented. The enclosure can for example be an automotive fuel canister.

### Background of the invention

Automotive fuel tanks are generally vented so that, as the volume of fuel decreases, air penetrates into the fuel tank so as to compensate for the decrease in fuel volume. Also, if e.g. due to a temperature increase, the volume in the fuel tank expands, air has to escape from the fuel tank. This air is however generally mixed with hydrocarbons of the fuel. In order to prevent hydrocarbons from escaping into the atmosphere and polluting the environment, a fuel canister is generally arranged between the fuel tank and atmosphere. Such a fuel canister generally has three ports: a tank port connected to the fuel tank, a vent port connected to atmosphere and a purge port connected to the internal combustion engine of the vehicle. One or more adsorbent chambers are arranged between the tank port and the vent port and contain adsorbent material, typically activated carbon. The activated carbon acts like a filter and retains the fuel component contained in the air-fuel mixture coming from the fuel tank, thereby preventing the hydrocarbons from escaping into the atmosphere. When air is sucked into the fuel tank, air enters the fuel canister via the vent port and flows through the adsorbent chambers to the tank port, from where it flows to the fuel tank.

As the fuel canister has a limited fuel storage capability, it has to be emptied on a regular basis. This regular renewing operation is called canister purge. Air is sucked from the vent port through the fuel canister via the purge port, whereby the adsorbent material in the adsorbent chambers is stripped of the stored fuel component, which is then fed via the purge port to the internal combustion engine of the vehicle, where it is burned.

To avoid penetration of contaminants into the fuel canister through the vent port, the latter is generally provided with a vent cover.

Such a vent cover for venting an enclosure is e.g. disclosed in US 4,561,558, wherein the vent cover comprises a cup-shaped main portion and a stem for connecting the main portion to the enclosure, the stem extending through the vent port of the enclosure. The stem member is slidingly moveable between a first and a second position. When venting is required, the stem member and the main portion are moved into the first position such that the vent cover is in a non-contacting relationship with the enclosure, thereby opening a vent passage. When venting is required, the stem member and the main portion are moved into the second position such that the vent cover is in a contacting relationship with the enclosure, thereby sealing the vent passage. A disadvantage of this vent cover is that a stem actuator must be provided for moving the stem between the first and second positions. Furthermore, a control unit is needed to detect when the vent passage should be opened and to control the stem actuator accordingly. The actuator and control unit obviously increase the complexity and cost of the system. A further disadvantage is that, although the enclosure might be protected from contaminants when the vent passage is sealed, this is not guaranteed when the vent passage is open. Also, closure of the vent passage can potentially be prevented by a piece of debris falling between the vent cover and the enclosure.

### Object of the invention

The object of the present invention is to provide an improved vent cover for an enclosure to be vented. This object is achieved by a vent cover as claimed in claim 1.

### Summary of the invention

The present invention proposes a vent cover for an enclosure to be vented, the enclosure comprising a vent port and a sleeve; the sleeve surrounding the vent port and extending outwards from the enclosure. The vent cover comprises a cup-shaped closure element comprising a base and a perimetric lateral wall, a plurality of openings being arranged in the perimetric lateral wall for allowing gasses to pass therethrough. The vent cover further comprises retaining means for connecting the vent cover to the enclosure, such that, when the vent cover is connected to the enclosure, the perimetric lateral wall of the closure element surrounds the sleeve of the enclosure and the closure element continuously closes the vent port.

The plurality of openings in the closure element allows gasses, such as e.g. air, to flow through the vent cover and hence to establish a communication between the inside and the outside of the enclosure. Although the closure element is permeable to gasses, it is impermeable to contaminants, such as e.g. small objects, insects or spiders. As the closure element continuously closes the vent port, the enclosure is at all times protected against penetrations of contaminants into the enclosure through the vent port. The closure element does not need to be moved from an open position to a closed position Also, there is no need to provide an actuator and control unit for opening or closing a vent passage, thereby reducing the cost of the system.

The perimetric lateral wall of the closure element preferably has a first wall portion connected to the base of the closure element and a second wall portion distal from the base of the closure element. The plurality of openings is preferably arranged in the second wall portion only and the sleeve extends, when the vent cover is connected to the enclosure, into an area delimited by the base and the first wall portion of the perimetric lateral wall. As gasses are drawn into the enclosure through the vent port, the gasses flow through a lower part of the lateral wall, i.e. the second wall portion of the lateral wall, into the interior of the closure element, the interior being the area delimited by the base and the perimetric lateral wall. Due to the sleeve extending into the cup-shaped closure element, the flow of gasses is then forced to flow towards the base of the closure element in a perimetric channel arranged between the sleeve and the perimetric lateral wall. As the sleeve extends into an area delimited by the base and the first wall portion, an upper end of the sleeve, i.e. the end of the sleeve distal from the enclosure, is located in proximity of the base of the closure element. Upon reaching an area proximate the base, the gasses can flow through the sleeve into the enclosure. The gasses are forced through labyrinth-like flow path, which allows to further avoid contaminants from reaching the interior of the enclosure.

Advantageously, a first groove is arranged in an outer surface of the sleeve, the first groove being in a plane substantially parallel to the base of the closure element. Preferably, the first groove is arranged in a portion of the sleeve, distal from of the enclosure. By arranging a groove in the outer surface of the sleeve, i.e. the surface of the sleeve facing the perimetric lateral wall, a liquid flowing along the outer surface of the sleeve in a direction towards the base can be prevented from reaching the upper end of the sleeve and from entering the sleeve and the enclosure. Liquid, such as e.g. water can hence be prevented from penetrating into the enclosure.

Advantageously, a second groove is arranged in an inner surface of the perimetric lateral wall, the second groove being in a plane substantially parallel to the base of the closure element. Preferably, the second groove is arranged in a portion of the perimetric lateral wall in proximity of the base. By arranging a groove in the inner surface of the perimetric lateral wall, i.e. the surface of the perimetric lateral wall facing the sleeve, a liquid flowing along the inner surface of the perimetric lateral wall in a direction towards the base can be prevented from reaching the base and from entering the sleeve and the enclosure. Liquid, such as e.g. water can hence be prevented from penetrating into the enclosure.

The first and second grooves are preferably shaped so as to easily receive liquid droplets flowing towards the base of the closure element and to prevent the droplets from going any further. The grooves hence act as stop-element. The groove can have a first and a second sidewall, the first sidewall - the one closest to the base - being substantially perpendicular to the inner, resp. outer, surface of the perimetric lateral wall, resp. sleeve. The second sidewall on the other hand is preferably bevelled so as to guide the liquid droplets into the groove.

The first groove and/or second groove preferably has a depth in a range between 1.3 and 5 mm. It will be understood that these dimensions can vary depending of the wall thickness of the sleeve and the perimetric lateral wall.

A gap can exist between the second wall portion of the closure element and the enclosure when the vent cover is connected to the enclosure, the gap having a width not exceeding a width of the openings. Such a gap allows increasing the overall cross-section of the openings, so that gas flow in and out of the enclosure is facilitated.

The openings can have a cross-section in a range between 1.4 and 17 mm, preferably depending on the overall size of closure element.

The openings are preferably elongate openings, preferably extending from an edge of the second wall portion towards the first wall portion.

At least one drain aperture can be arranged in the base of the closure element. This can be of particular interest if the vent port is located on a bottom face of the enclosure. Any moisture that manages to get into the sleeve or vent cover can hence be evacuated via the at least one drain aperture. Accumulation of moisture in the vent port is hence avoided. Such a drain aperture preferably has a cross-section in a range between 2 and 5 mm. Drain apertures of larger or smaller cross-section are however also possible depending of position of the vent cover. If the vent cover is sufficiently well protected, the cross-section of the drain aperture can be larger.

The retaining means preferably comprises a stem having a first end and an opposite second end, the first end being connected to the base of the closure element, and the second end comprising engaging means for engaging in complementary engaging means of the enclosure. The retaining means ensures that the vent cover does not fall off the vent port during manipulation of the enclosure. The stem can be used as a guiding device to help the mounting of the vent cover. The retaining means can be used to fixedly or releasably connect the vent cover to the vent port of the enclosure.

Advantageously, the closure element and the retaining means are integrally formed by injection molding. This allows for an easy, quick and cheap manufacture of the vent cover.

The enclosure can e.g. be an automotive fuel vapour fuel canister. Usually, such canisters are located in small and hidden areas on a car, e.g. between a wing and the car body in the wheel passage. These places are very propitious for insects or spiders and are often exposed to water, mud projections and humidity. It is therefore important to provide the vent port of such a canister with a good contamination protection. The vent cover as described above is particularly well suited for this function.

### Brief description of the drawings

The present invention will now be described, by way of example, with reference to the accompanying drawings, in which:
- Fig.1:: shows a schematic section view of an automotive fuel canister;
- Fig.2:: shows a detailed section view of an atmospheric port of the automotive fuel canister of Fig.1;
- Fig.3:: shows a detailed section view of an atmospheric port of the automotive fuel canister of Fig.1 according to another embodiment.

### Detailed description of a preferred embodiment

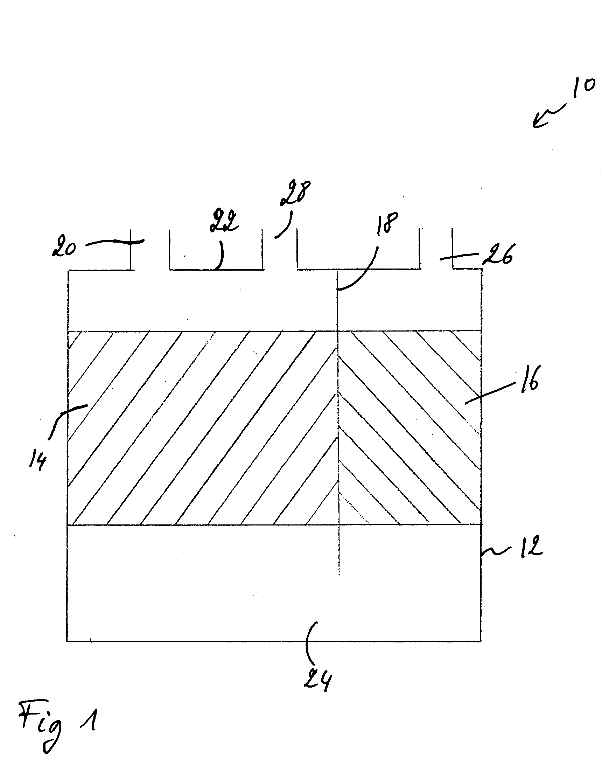

Fig.1 shows a fuel canister 10 comprising an enclosure 12 or housing. A first carbon chamber 14 and a second carbon chamber 16 are arranged within the enclosure 12 and are separated by a separation wall 18.

The fuel vapour from the fuel tank penetrates the fuel canister 10 via a tank port 20 arranged in an upper wall 22 of the enclosure 12. As the fuel vapour travels through the first carbon chamber 14, fuel component of the fuel vapour is adsorbed by activated carbon arranged in the first carbon chamber 14. The fuel vapour exiting the first carbon chamber 14 enters a compensator chamber 24, which leads the fuel vapour through a gap in the separation wall 18 to the second carbon chamber 16. As the fuel vapour travels through the second carbon chamber 16, further fuel component of the fuel vapour is adsorbed by activated carbon arranged in the second carbon chamber 16. The fuel vapour exiting the second carbon chamber 16 escapes to the atmosphere via a vent port 26 arranged in the upper wall 22. As the fuel component of the fuel vapour is adsorbed by the activated carbon in the first and second carbon chambers 14, 16 clear air exits the enclosure 12 via the vent port 26.

During purge operation of the fuel canister 10, fresh air is drawn into the enclosure 12 through the vent port 26 and flows through the second and first carbon chambers 16, 14 before reaching a purge port 28 arranged in the upper wall 22. As fresh air flows through the second and first carbon chambers 16, 14, the fuel component trapped in the carbon is desorbed and carried away with the air. The air and the desorbed fuel component exits the enclosure 12 via the purge port 28 and is led to the engine, where the fuel component is burnt. The activated carbon in the fuel canister is thereby regenerated.

In order to avoid penetration of contaminants into the fuel canister 10 through the vent port 26, the latter is provided with a vent cover. Such a vent cover can be more easily described by referring to Fig.2.

The enclosure 12 comprises a sleeve 30 connected to the upper wall 22 of the enclosure 12 and surrounding the vent port 26. The sleeve 30 can e a cylindrical element extending outwards from the enclosure 12.

The vent cover, generally indicated by reference number 32 comprises a cup-shaped closure element 34 having a base 36 and a perimetric lateral wall 38 substantially perpendicular to the base 36. When the vent cover 32 is mounted on the vent port 26, the perimetric lateral wall 38 of the closure element 34 surrounds the sleeve 30 creating a flow channel 40 between an outer surface 42 of the sleeve 30 and an inner surface 44 of the perimetric lateral wall 38.

The perimetric lateral wall 38 preferably extends from the base 36 all the way to the upper wall 22 of the enclosure 12 and comprises a first wall portion 46 connected to the base 36 and a second wall portion 48 distal from the base 36. The closure element 34 hence completely covers the vent port 26.

In order to allow an exchange of air between the inside and the outside of the enclosure 12, the closure element 34 comprises a plurality of openings 50 arranged in the second wall portion 48. Outside air can hence enter the flow channel 40 via these openings 50. The flow channel 40 then leads the air towards the base 36 before it can enter the inside of the sleeve 30 leading to the inside of the enclosure 12. The labyrinth-shaped flow path, i.e. towards the base and then away therefrom, allows avoiding penetration of contaminants into the enclosure 12. A gap 51 can exist between the second wall portion 48 and the upper wall 22 of the enclosure 12. Such a gap 51 should however have a cross-section not larger than the cross-section of the openings 50.

Furthermore, the sleeve 30 is provided, on its outer surface 42 and at a portion distal from the enclosure 12, with a first groove 52 for retaining any water droplets flowing along the outer surface 42 of the sleeve 30 towards the base 36. The first groove 52 has a first sidewall 54 and a second sidewall 56, the first sidewall 54 being the one closest to the base 36 of the closure element 34. The first sidewall 54 is substantially perpendicular to the outer surface 42 of the sleeve 30 so as to prevent water droplets from going beyond the first groove 52 and the second sidewall 56 is bevelled so as to lead the water droplets into the first groove 52.

Similarly, the perimetric lateral wall 38 is provided, on its inner surface 44 and at a portion distal from the enclosure 12, with a second groove 58 for retaining any water droplets flowing along the inner surface 44 of the perimetric lateral wall 38 towards the base 36. The second groove 58 has a first sidewall 60 and a second sidewall 62, the first sidewall 60 being the one closest to the base 36 of the closure element 34. The first sidewall 60 is substantially perpendicular to the inner surface 44 of the perimetric lateral wall 38 so as to prevent water droplets from going beyond the second groove 58 and the second sidewall 62 is bevelled so as to lead the water droplets into the second groove 58.

Water droplets, or any other liquid, due to, for example, moisture, heavy rain or washing are hence also prevented by the vent cover from penetrating into the enclosure 12.

In order to connect the vent cover 32 to the enclosure 12, a retaining means 64, in the form of a stem, is centrally connected to the base 64 of the closure element 34. The stem retaining means 64 can have a first end 66 connected to the base 64 and an opposite second end (not shown) provided with connection means for connection with corresponding connection means of the enclosure 12. The connection means can e.g. be snap fastening means.

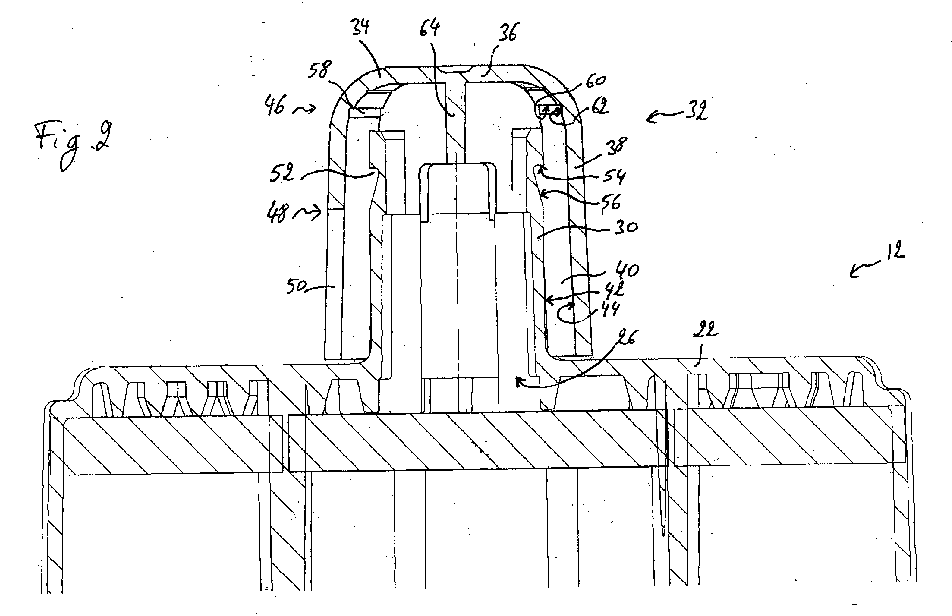

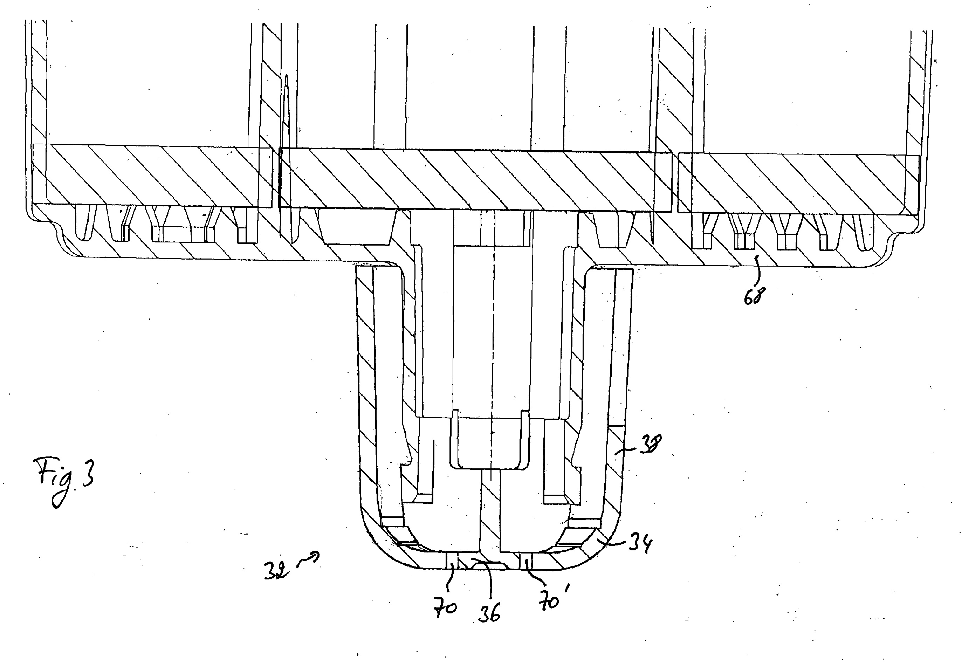

Fig.3 shows another embodiment of the invention wherein the vent port 26 is arranged in a lower wall 68 of the enclosure 12. In this embodiment, the closure element 34 is further provided with drain apertures 70, 70' in the base 36. These drain apertures openings 70, 70' allow water or other liquids to escape from the inside of the cup-shaped closure element 34.

### List of reference signs

- 10: fuel canister
- 12: enclosure
- 14: first carbon chamber
- 16: second carbon chamber
- 18: separation wall
- 20: tank port
- 22: upper wall
- 24: compensator chamber
- 26: vent port
- 28: purge port
- 30: sleeve
- 32: vent cover
- 34: closure element
- 36: base
- 38: perimetric lateral wall
- 40: flow channel
- 42: outer surface of sleeve
- 44: inner surface perimetric lateral wall
- 46: first wall portion
- 48: second wall portion
- 50: openings
- 51: gap
- 52: first groove
- 54: first sidewall of first groove
- 56: second sidewall of first groove
- 58: second groove
- 60: first sidewall of second groove
- 62: second sidewall of second groove
- 64: retaining means
- 66: first end
- 68: lower wall
- 70, 70': drain apertures

## Claims

1. Vent cover for an enclosure to be vented,
said enclosure comprising a vent port and a sleeve surrounding said vent port and extending outwards from said enclosure,
said vent cover comprising a cup-shaped closure element comprising a base and a perimetric lateral wall, a plurality of openings being arranged in said perimetric lateral wall for allowing gasses to pass therethrough,
said vent cover further comprising retaining means for connecting said vent cover to said enclosure, such that, when said vent cover is connected to said enclosure, said perimetric lateral wall of said closure element surrounds said sleeve of said enclosure and said closure element continuously closes said vent port.

2. Vent cover according to claim 1, wherein said perimetric lateral wall of said closure element comprises a first wall portion connected to said base of said closure element and a second wall portion distal from said base of said closure element, said plurality of openings being arranged in said second wall portion only and said sleeve extending, when said vent cover is connected to said enclosure, into an area delimited by said base and said first wall portion of said perimetric lateral wall.

3. Vent cover according to claim 2, wherein a first groove is arranged in an outer surface of said sleeve, said first groove being in a plane substantially parallel to said base of said closure element.

4. Vent cover according to claim 3, wherein said first groove is arranged in a portion of said sleeve, distal from of said enclosure.

5. Vent cover according to any of the previous claims, wherein a second groove is arranged in an inner surface of said perimetric lateral wall, said second groove being in a plane substantially parallel to said base of said closure element.

6. Vent cover according to claim 5, wherein said second groove is arranged in a portion of said perimetric lateral wall in proximity of said base.

7. Vent cover according to any of claims 3 to 6, wherein said first groove and/or second groove has a first and a second sidewall, said first sidewall being closest to said base,
wherein said first sidewall is substantially perpendicular to said inner, resp. outer, surface of said perimetric lateral wall, resp. sleeve, and
wherein said second sidewall is bevelled in a direction away from said base.

8. Vent cover according to any of claims 3 to 7, wherein said first groove and/or second groove has a depth in a range between 1.3 and 5 mm.

9. Vent cover according to any of claims 2 to 8, wherein a gap exists between said second wall portion of said closure element and said enclosure, said gap having a width not exceeding a width of said openings.

10. Vent cover according to any of the previous claims, wherein said openings have a cross-section in a range between 1.4 and 17 mm.

11. Vent cover according to any of the previous claims, wherein said openings are elongate openings, preferably extending from an edge of said second wall portion towards said first wall portion.

12. Vent cover according to any of the previous claims, wherein at least one drain aperture is arranged in said base of said closure element.

13. Vent cover according to any of the previous claims, wherein said retaining means comprises a stem having a first end and an opposite second end, said first end being connected to said base of said closure element, and said second end comprising engaging means for engaging in complementary engaging means of said enclosure.

14. Vent cover according to any of the previous claims, wherein said closure element and said retaining means are integrally formed by injection molding.

15. Vent cover according to any of the previous claims, wherein said enclosure is an automotive fuel vapour fuel canister.
